(19) Europäisches Patentamt
European Patent Office
Office européen des brevets

(11) **EP 4 601 205 A1**

(12) **EUROPEAN PATENT APPLICATION**

(43) Date of publication:
**13.08.2025  Bulletin 2025/33**

(51) International Patent Classification (IPC):
**H04B 7/04** *(2017.01)*     **H04B 7/06** *(2006.01)*

(21) Application number: **24157107.4**

(22) Date of filing: **12.02.2024**

(52) Cooperative Patent Classification (CPC):
**H04B 7/04013; H04B 7/0617**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Vestel Elektronik Sanayi ve Ticaret A.S.**
  **45030 Manisa (TR)**
• **KOC University**
  **34450 Sariyer (TR)**

(72) Inventors:
• **BASAR, Ertugrul**
  **34450 Sariyer (TR)**
• **AHMAD, Tufail**
  **34450 Sariyer (TR)**

(74) Representative: **Grünecker Patent- und Rechtsanwälte**
  **PartG mbB**
  **Leopoldstraße 4**
  **80802 München (DE)**

(54) **INDEXING SCHEMES FOR RECONFIGURABLE INTELLIGENT SURFACE-BASED QUADRATURE REFLECTION MODULATION**

(57)    The present disclosure relates to transmitting and receiving control methods and the respective corresponding controller devices. At the transmitting side, a data portion is obtained and a RIS is used, including a plurality of elements, to transmit the data portion. The plurality of elements are partitioned into L groups. For each group among the L groups, all elements of the group are configurable in the same one of a Quadrature mode or an In-Phase mode. The controlling comprises selecting a pattern out of a predefined set of patterns according to the data and according to a predefined correspondence between group patterns and respective data portions. The predefined set of patterns is a subset of all possible patterns for the L groups. Each pattern in the predefined set of patterns defines for each of the L groups of said pattern whether said group is configured in the Quadrature mode or in the In-phase mode. The data portion is transmitted according to the selected pattern. The corresponding demodulation is provided for the receiving side.

FIG. 5

**Description**

The present disclosure relates to the field of wireless communication. In particular, the present disclosure relates to methods and apparatuses modulating data transmitted over reconfigurable intelligent surfaces.

**BACKGROUND**

The fifth generation (5G) and beyond communication systems face diverse demands for applications such as low latency, improved reliability, high data rates, and flexibility. The increasing demand on data rates from the massive number of devices motivates the need to develop novel system architectures that are both energy and spectrally efficient. For the past years, state of the art research has focused on leveraging large-scale Multiple-Input-Multiple-Output (MIMO) systems, such as massive and millimeter wave (mmWave) MIMO at the base stations (BSs) and mobile users.

In this regard, emerging technologies such as reconfigurable intelligent surfaces (RISs) have gained substantial attention, primarily due to their inherent advantages of reducing energy consumption, cost-effectiveness, and enhancing the performance of wireless communications. RIS-based backscatter communications (RIS-BackCom) can be used to engineer wireless access points (RIS-AP), which can combine low complexity with cost-effectiveness. In certain situations, a RIS can also serve as a data source, whether originating from the RIS itself or aggregating data from multiple connected internet of things (RIS-IoTs). RIS-BackCom can also provide low-latency, as well as spectrally, and energy-efficient wireless connectivity for RIS-IoTs.

There are many challenges concerning control of a RIS in order to exploit its advantages for transmitting and receiving data.

**SUMMARY**

Techniques are described herein for controlling a transmitter or receiver by employing a more efficient indexing scheme used in quadrature reflection modulation (QRM) for a RIS.

The invention is defined by the independent claims. Some exemplary implementations are provided by the dependent claims.

For example, a transmitter controlling method is provided, comprising: obtaining a data portion; controlling a Reconfigurable Intelligent Surface, RIS, including a plurality of elements, to transmit the data portion, wherein the plurality of elements are partitioned into L groups, for each group among the L groups, all elements of the group are configurable in the same one of a Quadrature mode or an In-Phase mode, and the controlling comprises: selecting a pattern out of a predefined set of patterns according to the data and according to a predefined correspondence between group patterns and respective data portions, wherein the predefined set of patterns is a subset of all possible patterns for the L groups; each pattern in the predefined set of patterns defines for each of the L groups of said pattern whether said group is configured in the Quadrature mode or in the In-phase mode; and the data portion is transmitted according to the selected pattern.

Corresponding receiving method, receiving and transmitting devices and programs are provided.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a", "an", and "the" include plural referents unless the context clearly dictates otherwise.

**BRIEF DESCRIPTION OF DRAWINGS**

An understanding of the nature and advantages of various embodiments may be realized by reference to the following figures.

FIG. 1     is a block diagram illustrating an exemplary communication system.

FIG. 2     is a block diagram illustrating an exemplary wireless communication system using reflective intelligent surface, RIS.

FIG. 3     is a block diagram illustrating an exemplary simplified system with RIS access point, RIS-AP, illustrating partitioning of RIS elements into groups and applying QRM.

FIG. 4    is a block diagram illustrating an exemplary simplified system with IoT(s) as source of data fed to a RIS partitioned into groups and applying QRM.

FIG. 5    is a block diagram illustrating an exemplary simplified system with a RIS partitioned into groups and applying QRM with an indexing for improving the distance between QRM symbols.

FIG. 6    is a flow chart illustrating steps of an exemplary method performed by a transmitter.

FIG. 7    is a table illustrating an exemplary QRM indexing associating QRM symbols and codewords.

FIG. 8    is a flow chart illustrating steps of an exemplary method performed by a receiver.

FIG. 9    is a block diagram illustrating an exemplary structure of an apparatus for transmitting or receiving signals.

FIG. 10    is a block diagram illustrating an exemplary functional structure of a memory storing program code for performing transmitter processing.

FIG. 11    is a block diagram illustrating an exemplary functional structure of a memory storing program code for performing receiver processing.

FIG. 12    is a flow diagram illustrating steps of an exemplary receiver method.

Like reference numbers and symbols in the various figures indicate like elements, in accordance with certain example implementations.

## DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one". Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

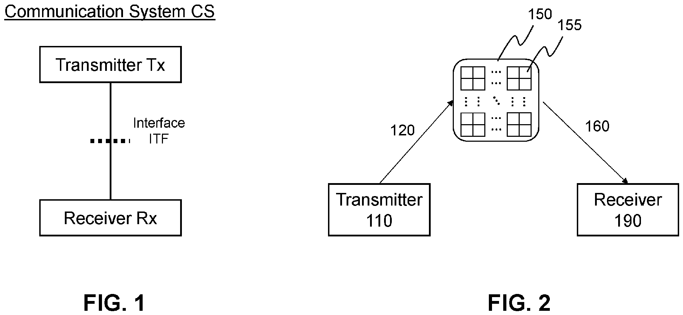

Fig. 1 illustrates an exemplary communication system CS in which Tx represents a transmitter and Rx represents a receiver. The transmitter Tx is capable of transmitting a signal to the receiver Rx over an interface ITF. The interface may be, for instance, a wireless interface. For example, the wireless interface may be implemented by a single antenna of transmitter Tx and/or receiver Rx. Alternatively, the wireless interface may be implemented by multiple antennas of the transmitter Tx and/or receiver Tx. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11be, and 6G technologies or the like.

The present disclosure is applicable to any wireless communication system which employs RIS. An exemplary simplified wireless system using a RIS is shown in Fig. 2. In particular, a transmitter 110 transmits a signal towards a RIS 150 over a first channel 120. The signal is reflected by the RIS 150 towards a receiver 190 and received by the receiver 190 over a second channel 160. The RIS 150 includes a plurality of RIS elements 155 arranged in a two-dimensional (2D) array (i.e. in a matrix). Each RIS element may change the phase of the signal received over the first channel 120, and thus, reflect the signal into a specific direction. The phases of the respective RIS elements 155 are typically controllable independently. Thus, the RIS 150 may be also referred to as a controllable 2D phase array. The RIS elements 155 may be arranges in a suqare or a rectangular matrix. In other words, the number of RIS elements 155 in the horizontal and vertical direction may differ.

Fig. 2 illustrates a simplified system model including a RIS-based Access Point (RIS-AP) 240. The RIS-AP includes an AP 210 and a RIS 250. In a RIS-AP system 200, a low-cost passive RIS 250 performs modulation, beamforming, and channel equalization. In such a system 200, RIS 250 would be typically located close to the AP 210 so that the RIS 250 and its transmission is not affected by fading. There would be no direct path between the AP 210 and a receiver 290.

The RIS-AP 240 may employ Backscatter communication (BackCom) which is an energy-efficient approach particularly suitable for power-limited wireless nodes in 6G networks. BackCom allows passive backscatter nodes (such as passive RIS) to transmit signals through modulation and reflection of the incident waves and harvest energy from the incident signals to perform their function. Through this energy harvesting and saving capability, BackCom is able to provide a green communication platform for 6G and IoT networks. In this scenario, the RIS 250 may be supported by a nearby RF signal generator or contains an attachment that transmits an unmodulated carrier signal (e.g. $\cos(2\pi f_c t)$) at a certain carrier frequency $f_c$ towards the RIS. Information bits are then conveyed through the adjustment of reflector-induced phases of the RIS 250.

The AP 210 may receive m bits for transmitting to the receiver 290 and transmit them to the RIS 250. In this example, an ideal channel (with gi=1) is assumed. The assumption gi=1 is realistic in case of the RIS-AP, where the RIS and the AP are spatially close or in case AP and RIS have a wired connection for transmission of data, so that AP only provides an RF signal). The RIS-AP 240 further comprises the controller 230. The controller may receive feedback from the AP 210. The feedback may include information such as channel information, which can be employed by the RIS to perform equalization of the respective channel(s). Moreover, the controller may issue q bits that can be transmitted by the RIS 250, for example by using a quadrature reflection modulation (QRM).

The QRM partitions RIS elements 255 into two subsets 271, 272 for reflecting incident signals into two orthogonal directions as well as for passive beamforming, and encodes its local data (q bits) onto the element partition options 271 or 272.

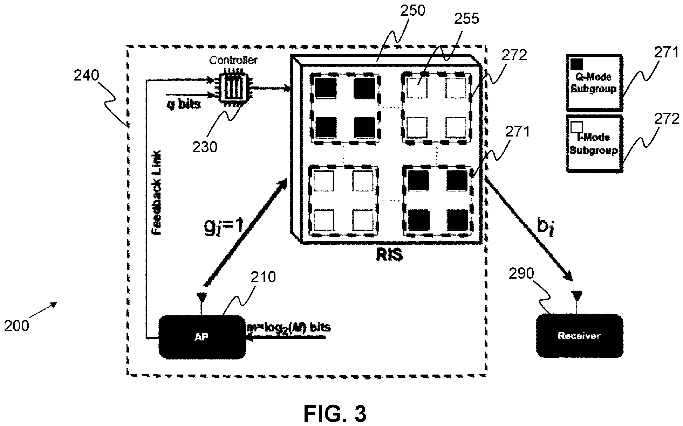

In particular, the RIS 250 can here also operate as a data source (e.g. the q bits shown in Fig. 3), originating either from the RIS 250 itself or aggregating data from various connected IoT devices or the like. Transmitting data from the RIS 250 to users presents a challenge due to its passive nature and absence of conventional RF chains. A backscatter node can be employed to transmit the RIS 250 data through a modulation of the same signal (carrying the m bits from the AP 210 received via the channel gi), which is being steered by it toward the receiver 290. Quadrature reflection modulation (QRM) is a recently developed technique that has emerged as a promising candidate among IM-based methods for implementing RIS-based backscatter communications (RIS-BackCom).

The RIS-based QRM (an example is provided in S. Lin, F. Chen, M. Wen, Y. Feng and M. Di Renzo, "Reconfigurable Intelligent Surface-Aided Quadrature Reflection Modulation for Simultaneous Passive Beamforming and Information Transfer," in IEEE Transactions on Wireless Communications, vol. 21, no. 3, pp. 1469-1481, March 2022, doi: 10.1109/TWC.2021.3104059, referred to in the following as [1]) involves partitioning all RIS elements 255 into multiple groups. In Fig. 2, a subgroup is indicated by a dashed line and includes four RIS elements 255, that can be referred to as reflective elements or merely as elements herein. Each group (i.e. all elements in the group) is configured either in a quadrature mode (Q-mode) or in an in-phase mode (I-mode). A Q-mode group 271 is illustrated by four filled squares representing four elements 255. An I-mode group 272 is illustrated by four empty squares representing four elements 255. Groups configured in either of the two modes can be distinguished at the receiver 290, as reflected signals from these groups differing in mode are orthogonal to each other. The number four of elements in a group is only exemplary. In general, a group can have two or more elements.

Indices of groups configured in I-mode are included in a set I, while the indices of groups configured in Q-mode are listed in a set Q. With L RIS groups, a total of 2^L distinct sets I (and correspondingly sets Q) are possible. Configuration of groups according to the set I (or set Q) gives rise to a corresponding distinct Group-Mode-Pattern (GMP). The RIS 250 conveys its data using these distinct sets I or, equivalently, the corresponding GMPs. Sets I and Q are complementary for a given GMP and knowing one enables determining the other one. To transmit q bits, RIS-QRM can utilize any of the 2^q GMPs (or corresponding sets I) out of the total of 2^L GMPs. It is noted that "^" stands for operation of "power of".

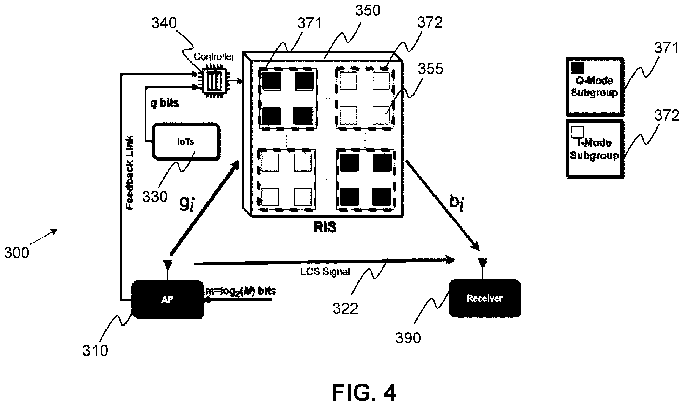

Fig. 4 shows another possible communication system 300 supporting wireless connectivity of RIS-based IoT devices 330. In certain situations, a RIS 350 can also serve as a data source. The data may originate from the RIS 350 itself or the RIS 350 may be capable of aggregating data from one or multiple connected IoTs (RIS-IoTs) 330 as is shown in Fig. 4.

The RIS-BackCom can also provide low-latency, spectrally, and energy-efficient wireless connectivity for the RIS-IoTs 330. In addition to facilitating IoT connectivity, the RIS 350 in Fig. 4 also fulfills its primary function of enhancing the received SNR, thus improving the detection of data transmitted by an AP 310. The remaining portions of the system are similar as in Fig. 3. In particular, the AP 310 may transmit data (m bits) addressed to a receiver 390 via the RIS 350. Thus, the channel between the AP 310 and the receiver 390 includes the first channel gi (to RIS 350) and a second channel bi (from the RIS 350 to the receiver 390). There may but does not have to be a line of sight (LOS) 322 between the AP 310 and the receiver 390. A controller 340 may be a part of the RIS 350 or may be separate. Its function may include to collect data (q bits) from one or more IoT devices 330. The RIS 350 has a plurality of RIS elements 355 which are grouped into I groups 372 and Q groups 371.

The present disclosure facilitates provision of an effective RIS-QRM indexing scheme. In particular, GMPs are created or selected with the objective of achieving a better (possibly large and uniform) separation among the corresponding QRM symbols. Adherence to this principle, leads to indexing schemes which may substantially improve the error performance of RIS-QRM based BackCom systems.

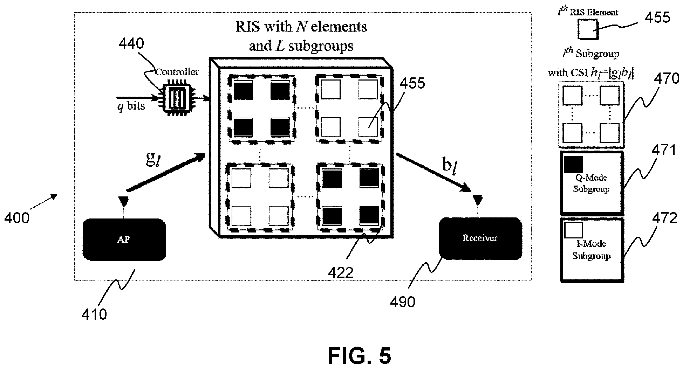

Fig. 5 shows an exemplary communication system 400, which employs a QRM with an indexing scheme for improving the reception. The system 400 is similar to the above discussed system 300 or 200. In particular, the system 400 includes an access point (AP) 410 and a receiver 490 which may be a wireless station (STA). The AP 410 and STA 490 communicate with each other over a RIS 450. The RIS comprises a two-dimensional array of numerous small, passive, and cost-effective reflective elements. These elements can reflect the incident signal with controllable additional phase shift. In particular, the RIS 450 includes N antenna elements 455. As can be seen in Fig. 5, the AP 410 transmits signals to the RIS 450 over a first channel with a channel impulse response gi and the RIS 450 transmits signals to the receiver 490 over a second channel with channel impulse response bi. In general, there may be, but does not need to be a line-of-sight (LOS) channel 422 between the transmitter 410 and the receiver 490.

An AP 410 may follow a convention that the primary data (m bits in Fig. 5) is phase shift keying (PSK) modulated by the AP 410, while the RIS 450 may transmit additional data (q bits) using the QRM. For this purpose, Fig. 5 further illustrates a controller 440, which controls the RIS 450. The controller 440 may receive the q bits that are to be transmitted over the RIS 450 to the receiver 490 or to other receiver(s). The controller may obtain the data from one or more IoT devices 430 or they may be data originating from the RIS 450 or the controller 440 itself (e.g. signaling data or feedback data for the receiver 490). However, it is noted that the transmission of the q bits (using QRM) can also be performed on its own, without simultaneous transmission of the m bits (e.g. using PSK).

The approach for indexing in QRM of the present disclosure is exemplified for both system models (Fig. 3 RIS-AP - collocated RIS and the RF generator, Fig. 4 separate AP transmitting over a RIS - the RIS and the RF generator are not collocated). Nonetheless, in the RIS-AP model, the AP 410 can be used as a pure radio frequency (RF) source, while the RIS 450 handles both types of modulation (modulation of data m e.g. by a PSK and modulation of data q by QRM) simultaneously. This variation does not affect the analysis and performance of the indexing for QRM described herein. For the purpose of the present disclosure, the RIS 450 may be part of the AP 410, but it can also be separate. If the RIS 450 is part of the AP 410, due to the proximity and line-of-sight (LOS) conditions between the RIS 450 and the AP 410, $gi = 1$, $\forall l$ can be assumed. In the RIS-IoTs model, the AP 410 and the receiver 490 communicate while leveraging the RIS to enhance the link quality. The RIS also acts as a backscatter node to transmit its own data over the same RF signal. We assume that there exists a feedback link between the AP and RIS. Notably, no constraints are placed on the direct channel in this model.

In the Reconfigurable Intelligent Surface-based Quadrature Reflection Modulation (RIS-QRM), a subset of subgroups reflects the signal in phase with the incident signal, while the remaining subgroups reflect the signal such that it is orthogonal to the in-phase signal at the receiver. The indices of the subgroups used for in-phase and quadrature reflections convey additional data bits.

According to the present disclosure, the N antenna elements 455 are grouped into L groups 470 as schematically represented in Fig. 5 on the right hand side. In Fig. 5, the groups are square 2x2 arrangements of four antenna elements 455. However, this is only an example. In general, a RIS 450 with N reflecting elements is partitioned into L subgroups, which are assigned numerical labels ranging from 1 to L, with N and L being positive integers. The elements 455 of a group 470 are arranged adjacently one to another in a rectangle or square of r1 x r2 elements, with r1 and r2 being an integer greater than 0. Each group 470 is then used to transmit the signal in one of two modes (I or Q), leading to the creation of a distinct pattern which corresponds to q bits.

Two possible exemplary approaches for grouping the RIS elements are provided, and both entail a trade-off between improving the received SNR and reducing the burden of channel state information (CSI) overhead.

A first exemplary grouping scheme applies element-wise equalization corresponding to the channels associated with the respective RIS elements. This scheme fully leverages the RIS as the received signal may be stronger due to the constructive interference of all the reflected signals. However, a drawback may arise in the form of CSI estimation overhead for the entire set of N RIS elements, which can be considerable especially for large RISs.

In a second exemplary grouping scheme, channels are estimated on a subgroup level, thus reducing the CSI overhead. In other words, the equalization phase shift for every element within a subgroup is tuned the same and corresponds to that subgroup's overall CSI. Though CSI overhead is reduced, this scheme will in general not attain optimal channel equalization. As a result, this scheme may lead to a weaker signal at the receiver compared to the previously mentioned grouping scheme.

Any of these two CSI approaches may be used with any of the embodiments and exemplary implementations described therein.

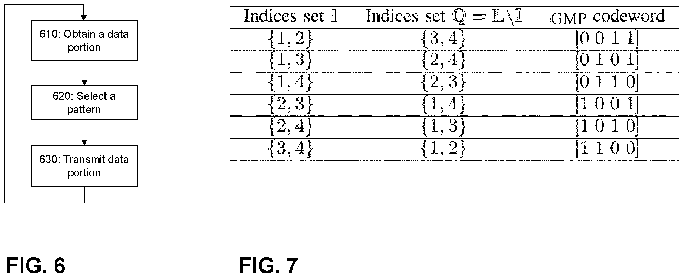

According to an example, a method for controlling a transmitter is provided that comprises multiple steps, as can be seen in Fig. 6. First, the transmitter obtains 610 a data portion, corresponding to q bits. This data portion may be provided by (obtained from) one or more IoTs 430 or may be generated by the controller 440 or the RIS 450 or come from any other data source. Based on this data portion, the RIS 450, including a plurality of elements 455, is controlled (e.g. by the controller 440) to transmit the data portion.

Based on the input q bits, the RIS-controller 440 selects 620 a pattern out of a predefined set of patterns according to the data and according to a predefined correspondence between group patterns and respective data portions.

Each group among the L groups mentioned above can be configured in either the Quadrature mode (Q-mode) or In-Phase mode (I-mode). A pattern (also referred to as Groups-Mode-Pattern, GMP) defines for each group its pertaining to either Q mode or to I mode. The predefined set of patterns is a subset of all possible patterns for the L groups. This implies that not all possible patents are used, which results in a larger distance between the patterns which in turn facilitates a more robust reception.

A set $\mathbb{I}$ represents the indices of groups configured in the I-mode, while a set Q represents the indices of groups configured in the Q-mode. Since each group can be only either in I-mode or in Q-mode, the set $\mathbb{I}$ and the set $\mathbb{Q}$ are complementary. With L RIS groups, a total of $2^L$ distinct sets $\mathbb{I}$ (and hence sets Q) are possible.

Configuration of subgroups according to a set $\mathbb{I}$ (or set $\mathbb{Q}$) gives rise to the corresponding distinct GMPs. The RIS conveys the data using these distinct sets $\mathbb{I}$ or, equivalently, the corresponding GMPs. To transmit $q$ bits (q-bit long symbols) with q<L, RIS-QRM can utilize any of $2^q$ GMPs (or corresponding sets $\mathbb{I}$) out of a total $2^L$ GMPs. In order to allow for modulation and demodulation, the association between each of the 2^q modulation symbols and the respective GMP has to be defined and known at the transmitter and the receiver.

In the method of Fig 6, the data portion is transmitted 630 according to the selected pattern.

In simpler terms, the RIS-controller 440 controls the subgroups corresponding to a GMP that is chosen out of a predefined set of up to $2^L$ GMPs according to the desired transmitted q bits and the predefined mapping between the GMPs and the q-bit long symbols.

In Fig. 6, an arrow from step 630 to step 610 indicates that a further q-bit long symbol may be transmitted in a similar manner. In particular, if a message to be transmitted from the controller 440 to the receiver 490, then the message may be split into symbols with length of q bits and each such q-bit symbol may be transmitted as shown in Fig. 6.

In Fig. 5, a simplified system model is illustrated. Both the AP 410 and the receiver 490 are equipped with a single antenna (in general, the AP and/or the receiver may have multiple antennas). The AP 410 serves as a pure RF source for the RIS 450. The RIS 450 employs RIS-QRM to transmit q bits in a symbol duration. The RIS 450 with N reflecting elements is partitioned into L subgroups, which are assigned numerical labels ranging from 1 to L. Each subgroup consists of N/L adjacent elements. As illustrated in Fig. 5, a CSI of the $l^{th}$ RIS group (referred to as sub-group in the figure) is represented by $h_l$, which is given as $h_l = |g_l b_l|$. It is noted that $h_l$ may be a real number if each RIS-group also performs phase equalization of the incident signal corresponding to the multiplicative channel associated with that group.

The overall CSI of subgroups in set $\mathbb{I}$ is denoted by $h_{\mathbb{I}}$, which is equal to the sum of CSI amplitudes of all the subgroups in set $\mathbb{I}$. The term $h_{\mathbb{Q}}$ denotes the overall CSI of subgroups in set Q, which is equal to the sum of CSI amplitudes of all the subgroups in set Q. It is noteworthy that $h_{\mathbb{I}}$ and $h_{\mathbb{Q}}$ are complementary for a given GMP, meaning that knowing one determines the other. Every set $\mathbb{I}$ has an associated GMP and hence corresponding $h_{\mathbb{I}}$ and $h_{\mathbb{Q}}$ values. Symbols $h_{\mathbb{I}}$ and $h_{\mathbb{Q}}$ represent the real and imaginary parts of the RIS-transmitted QRM symbols, respectively.

The role of an indexing scheme for RIS-QRM is to select the $2^q$ indices sets $\mathbb{I}$ (or GMPs) among the 2^L possible GMPs. Every GMP has an associated quadrature reflection modulated (QRM) symbol, whose position on a constellation map is determined by the underlying communication channels. Selecting/designing the GMPs solely based on the distinctness of their indices sets does not necessarily guarantee that the corresponding QRM symbols are also distinct, i.e., they are sufficiently separated to be distinguishable from a detector's perspective. The bit error rate (BER) of RIS-transmitted data depends on the Euclidean distances among all the QRM symbols corresponding to the chosen $2^q$ GMPs, which ideally should be maximized.

To further illustrate the association between QRM symbols and bits, Fig. 7 shows an example in which L=4 and in which less than 2^L QRM symbols are usable. In particular, our of the possible 8 symbols, only six are actual QRM symbols. In particular, the last column ("GMP codeword") defines the six possible QRM codewords (bit combinations assigned to respective valid QRM symbols). As can be seen, codewords [0 0 0 0] and [0 0 0 1] do not have any valid symbol of the QRM in this example. The predefined association between the QRM symbols and codewords is defined by the wows of the table in Fig. 7.

The GMP codeword has 4 bits [g1 g2 g3 g4] corresponding to respective four groups of the RIS 450. If a bit has a value 0, it means that the group corresponding to that bit is in the set $\mathbb{I}$ (see column 1) and that it does not belong in the set Q (see column 2). If a bit has a value 1, it means that the group corresponding to that bit is not in the set $\mathbb{I}$ and that it belongs in the set Q. Specifically, a codeword [1 0 0 1] means that groups 2 and 3 are configured in the I-mode and the groups 1 and 4 are configured in the Q-mode. Similarly, a codeword [0 1 0 1] means that groups 1 and 3 are configured in the I-mode and the groups 2 and 4 are configured in the Q-mode.

The transmission in step 630 may be a simultaneous transmission of the m bits and the q bits. Gor example, in case the RIS is passive, it utilizes the an AP-generated RF signal and modulates it using the above discussed QRM to convey the additional q bits. In this setup, the AP generates an RF signal and employs M-PSK to convey m bits per symbol. For example, M = 2^m, where m can be any positive integer, i.e., $m \geq 1$. In the special scenario where m = 0, the AP functions solely as an RF source for the RIS, without transmitting any data. N reflecting elements 455, and the phase shifts introduced by each element into the incident RF signal are adjusted electronically by the RIS controller 440. Both channel equalization (limited to phase equalization) and quadrature reflection modulation are performed at the RIS (440, 450). Subsequently, the signal is reflected toward the receiver (S3).

According to an exemplary implementation, the predefined set of patterns is formed by L patterns. For instance, the predefined set of patterns consists of (has exactly the number of) L patterns out of possible 2^L patterns.

*Example 1: Incremental Indexing Scheme*

In this first example, in the predefined set of patterns, a k-th pattern, k being an integer 1 to L, consists of groups 1 to k configured in a first mode and the remaining L-k groups configured in a second mode. The first mode is the quadrature mode and the second mode is the in-phase mode or vice versa (the second mode is the quadrature mode and the first mode is the in-phase mode).

Such scheme may be thus called incremental indexing scheme (IIS) for RIS-QRM. It may be highly effective in ensuring significant separation among all L=2^q QRM symbols.

For instance, obtaining a modulation table in IIS may start with creating a first GMP by configuring only the first group (k=1) in the I-mode and the remaining $L - 1$ groups in Q-mode. The next GMP is designed such that the $h_{\mathbb{I}}$ value of the corresponding QRM symbol is incremented compared to the preceding GMP (resulting in an automatic decrement of the $h_{\mathbb{Q}}$ value). It is accomplished by configuring the next (immediately following) group in I-mode as well, which was in Q-mode in the preceding GMP. For k=2, it means that first and second groups are configured in the I-mode and the remaining L-2 groups are configured in the Q-mode. This incremental process continues until all the subgroups are indexed in set $\mathbb{I}$, and none in Q for the last SMP. For instance, for k=L there is no group configured in I-mode, sonce all groups are configured in Q-mode. Consequently, a total of $L$ GMPs are created, allowing for the transmission of $q = log_2(L)$ bits per QRM symbol (or per GMP, as the GMP is referred to as QRM symbol). The assignment between the bits of the q-bit codeword and the GMPs may be predefined by simply numbering the incrementally obtained GMPs in the order of creating them, e.g. as follows:

| q-bit codeword | GMP pattern | Indices set I |
|---|---|---|
| [00] | [1 0 0 0] | {1} |
| [01] | [1 1 0 0] | {1,2} |
| [10] | [1 1 1 0] | {1,2,3} |
| [11] | [1 1 1 1] | {1,2,3,4} |

The q-bit codeword is the codeword of the message to be transmitted. GMP codeword is only a symbolic representation of the q-bit codeword in the group space [g1 g2 g3 g4] and indices set defines indices of groups that are in I-mode.

It is also possible to configure the first subgroup in the Q-mode and the remaining $L$ - 1 subgroups in I-mode. The next SMP is designed such that the $h_{\mathbb{I}}$ value of the corresponding QRM symbol is decremented compared to the preceding SMP. It is accomplished by configuring the next subgroup in Q-mode as well. The corresponding example is below:

| q-bit codeword | GMP pattern | Indices set I |
|---|---|---|
| [00] | [0 1 1 1] | {2,3,4} |
| [01] | [0 0 11] | {3,4} |
| [10] | [0 0 0 1] | {4} |
| [11] | [0 0 0 0] | {} |

The IIS approach is simple and effective in terms of distance between the GMPs. This scheme may be further modified by taking less than L possible codewords to further increase the distance. Moreover, it is noted that the scheme may be further modified by taking for example L+1 codewords, including not only all groups in the first mode (e.g. {1, 2, 3, 4} in the I-mode if the first mode is I-mode), but also including all groups in the second mode (e.g. including GMP with no group in the I-mode if the first mode is I-mode).

*Example 2: Universal Indexing Schemes*

In this example, the predefined set of patterns corresponds to a set obtained by:

- sorting all 2^L possible patterns in a predetermined order,
- selecting out of the 2^L patterns 2^q patterns, q<L being an integer, according on the separation in the in-phase and quadrature domain, and
- wherein said pattern channel state information for a pattern corresponds to a sum of amplitudes of groups in said pattern either for all groups configured in the in-phase mode or for all groups configured in the quadrature mode.

This approach may facilitate provision of an efficient indexing schemes in a more flexible manner, allowing for a tradeoff between bits per channel use BPCU (here *q*) and/or the error performance.

In any of the schemes in this second example, there may be a restriction that q cannot be increased to more than $log_2(L)$. However, in general, this requirement may be also relaxed.

In other words, some of the schemes of the present disclosure may increase *q* more freely for a given number of RIS-subgroups, i.e., *L,* thus providing more flexibility to adapt, e.g. to the requirements of the deployment scenario such as IoT message length, available RIS size, or the like. It is further noted that it is conceivable not to use all available RIS elements for grouping and indexing. Thus, the RIS size (in terms of number of elements) may imply L, but does not have to.

As mentioned above, in general, with *L* RIS groups, a total of 2^L QRM-based GMPs are possible. Their $h_{\mathbb{I}}$ values range from 0 for a GMP with no subgroups in I-mode to a maximum of $\sum_{l=1}^{L} h_l$ for a GMP with all subgroups in I-mode.

These GMPs are sorted in the predetermined order mentioned above. For example, the predetermined pattern order is an order of decreasing channel amplitude of in-phase groups for the sorted patterns. This is, in terms of the above notation a descending order based on the $h_{\mathbb{I}}$ values of the respective GMPs. As mentioned above, the channel amplitude may be obtained from a CSI provided by the AP 410 to the RIS 450 (or the RIS controller 440) over the feedback link. The CSI may be per element or per groups as also already mentioned above. However, the present disclosure is not limited to these two options. In general, it is conceivable to provide feedback on a cyclic manner sequentially in time for a subset of groups and to interpolate the CSI for the remaining groups, or the like.

Once the GMPs are sorted, they are sequentially labeled. The labeling may be, for example, for L groups from 1 to 2^L. To fulfill target BPCU requirements and enhance BER, the best 2^q out of the total 2^L GMPs are selected. The first GMP in the sorted list may be chosen by default, and the remaining 2^q - 1 GMPs can be selected using any method that provides a noticeable separation between the corresponding QRM symbols. The gap between QRM symbols in one dimension naturally translates to the same gap in the other dimension (I, Q).

In the following, some exemplary methods for selecting the GMPs for the desired number of codewords are provided.

*a) Quantile scheme*

In one exemplary method the selecting includes selecting the first pattern, and omitting every $2^{L-q}$-1 consecutive patterns before selecting a subsequent pattern, until 2^q patterns are in the set of patterns.

According to this scheme, the patterns are selected uniformly and since the channel characteristics are involved, the selection may lead to improved distance between the patterns.

It is noted that this selection may be performed once at the beginning of the transmission to a receiver 490, or may be performed regularly in order to follow possible changes in the channel. In general, due to the channel varying in coherence time, the CSI may also be updated in every coherence time.. The updating assumes that the same channel information is available to the RIS 450 / controller 440 and the receiver 490, which is the case, e.g. if a feedback scheme from the receiver 490 to the RIS / controller is employed. The regular updating may be an updating each predefined time interval, which may correspond to interval in which q-bits are transmitted or a multiple of such interval.

This scheme is referred to as a quantile scheme, since all $2^{L-q}$ - 1 consecutive GMPs are omitted before choosing (selecting) a subsequent one to be included into the QMPs actually used e.g. as follows:

| q-bit codeword | GMP number |
|---|---|
| [00] | 1 |
| [01] | 5 |
| [10] | 9 |
| [11] | 13 |

Here, with L=4, a total of 16 GMPs were ordered from 1 to 16. To transmit a q=2-bit codeword, a total of 4 GMPs were chosen to transmit the codeword. The first sorted GMP and then every 2^(L-q)=4th GMP is chosen, resulting in the GMPs numbered 1, 5, 9 and 13.

*b) Proximity Scheme*

In the proximity scheme, the selecting includes selecting the pattern with the highest value of the pattern channel state information, and selecting the remaining 2^q-1 patterns as those with the CSI value closest to CSI values uniformly distributed in the interval 0 to the highest value of the pattern channel state information.

For example, in the proximity scheme, the $h_{\mathbb{I}}$ value of the initially chosen GMP (e.g. the above-mentioned, per default selected GMP which has the highest $h_{\mathbb{I}}$ value) is divided by $2^q$. Here $2^q$ is a value, which represents the ideal spacing between two adjacent QRM symbols when all the $2^q$ chosen GMPs are uniformly and maximally separated.

It is noted that since QRM symbols do not necessarily exist precisely at these evenly distributed positions, instead, the method may opt for symbols that are in close proximity to these ideally spaced positions. Therefore, we select those GMPs which are closer to the ideal positions on a signal constellation diagram (closer in terms of Euclidean distances).

In the above examples, $h_{\mathbb{I}}$ has been analyzed. As mentioned above, instead of $h_{\mathbb{I}}$, the $h_{\mathbb{Q}}$ values may be used instead in a similar way.

*c) Exhaustive Scheme*

In the exhaustive scheme, the selecting includes: selecting the first pattern (e.g. the pattern with the highest value of the pattern channel state information), and selecting, among all unique combinations of a set of patterns including the first pattern are created, 2^q combinations with the lowest combined value of:

$$\frac{(|d_{max}| - |d_{min}|)}{|d_{max}|}$$

where $d_{max}$ and $d_{min}$ represent the maximum and minimum distances between all patterns located in the predetermined order next to each other in each combination.

In more specific terms, all unique combinations of $2^q$ - 1 GMPs drawn from the pool of $2^L$ - 1 GMPs are constructed, while maintaining their original descending order. The GMP initially selected is then placed in the first position of every combination. Subsequently, the distances $d$ (along any dimension I or Q) between all neighboring symbols within each combination are calculated. Following this, the set of those $2^q$ GMPs is selected, whose combination results in the lowest value for the following metric:

$$\frac{(|d_{\max}| - |d_{min}|)}{|d_{max}|}$$

where $d_{\max}$ and $d_{\min}$ represent the maximum and minimum distances between neighboring symbols in each combination. Neighboring symbols refer to the symbols with labels differing by one. Distance refers e.g. to an Euclidean distance on constellation diagram between neighbouring GMPs. Whereas, neighbouring GMP means consecutive GMPs in each combination that are formed in the original sequential order. It is noted that Euclidean distance is mentioned for exemplary purposes. In general, other distance metric could be used.

It is noted that the above mentioned options a) to c) are only exemplary and not to limit the present disclosure.

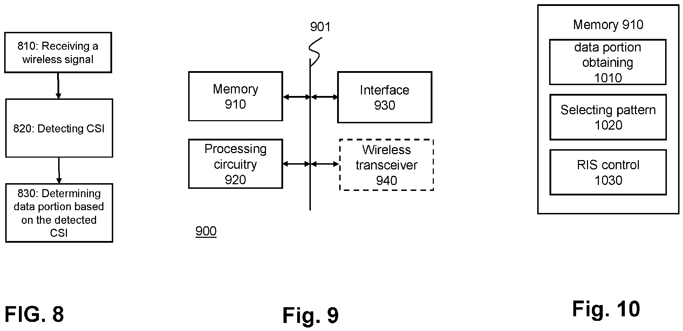

Fig. 8 illustrates a method of receiving data that may be used for receiving any demodulating data transmitted with the method described with reference to Fig. 6.

In particular, a receiver controlling method of Fig. 8 comprises a step 810 of receiving a wireless signal and a step 820 of detecting a channel state information based on the received wireless signal. Said channel state information corresponds to a function of amplitudes of the received wireless signal configured in an in-phase mode and/or configured in a quadrature mode. The method further comprises a step 830 of determining a data portion consisting of q bits, q being an integer, based on the detected channel state information and based on a given association between a set of predefined channel state information data and a plurality of respective predefined data portions consisting of q bits, q being an integer.

For example, the step 830 of determining the data portion based on the detected CSI may be performed by comparing the detected CSI with the plurality of CSIs (or ranges) to find match and then selecting the associated q bits.

It is noted that the above-mentioned given association between a set of predefined channel state information data and a plurality of respective predefined data portions may be a lookup table that associates CSI ranges (values) with bit values (demodulation table). However, the present disclosure is not limited thereto and the association may be given by a rule (or algorithm or the like) that does not require storing the entire table.

The set of predefined channel state information data may be, for example, non-overlapping ranges of CSI values that cover the CSI scale. If a range breadth is fixed, the predefined data may be CSI range centre values or start values or the like. However, this is only exemplary and the present disclosure is not limited to any particular way the association is defined.

The function of amplitudes of the received wireless signal may be a sum of the amplitudes of signals received for the q bits (in one reception interval) in a particular dimension (in an in-phase mode and/or in a quadrature mode).

For example, a subset of m predefined data portions of the plurality of predefined data portions, m being an integer, are determined to be the most likely data portions to correspond to the detected channel state information. In an exemplary implementation, in case of simultaneous transmission using PSK (for the m bits) and QRM (for the q bits), a QRM symbol may be detected first, and then the PSK symbol. In order to increase precision, in the first stage, QRM symbol can be detected and one or more candidates of QRM symbol may be considered (selected) in the first stage. In the second stage follosing the first stage, the PSK symbol(s) can be detected with all of the selected candidate QRM symbols (as detection results). Then, the best pair of PSK and QRM symbol may be selected as a result of detection, e.g. the PSK and QRM symbol which minimizes the error.

For example, the receiver receives 810 a signal conveying the QRM symbol (modulated q bits in Fig. 5). In some exemplary implementations, the signal may also include a signal that underwent phase modulation due to both the PSK symbol (modulated m bits in Fig. 5). Noise and/or interference may be included as well.

It is noted that the m bits do not have to be modulated with a PSK modulation. For example, they may be unmodulated or modulated with another approach.

Employing a PSK modulation may provide an advantage that an amplitude modulation (AM) of the received signal stems solely from the QRM symbol. The detector may then prioritize the detection of the QRM symbol as the first step. This can be effectively accomplished by employing an AM detector, which relies solely on the amplitudes of the signals involved (in the I and/or Q domains). Assuming that the QRM symbol is detected correctly in the first step, the detector proceeds to detect the PSK symbol x (with m bits) in a second step.

For example, to acquire the QRM symbol, the detector fist determines the CSI based on the received wireless signal. This CSI is then associated a codeword of q bits, based on the given association between CSI values and possible codewords. In other words, the q bits are determined by employing a predefined lookup table that associates CSI values with bit values.

However, the detector may also try to enhance its error performance by, instead of selecting a solitary QRM symbol that minimizes the decision metric in a first step, choosing such QRM symbols in ascending order of their decision metric values (i.e., error values). Subsequently, the detector may try these k QRM symbols and select the one that minimizes the decision metric in a second step. This modification may increase the detector's complexity, but it may also significantly improve error performance. Such a low complexity (LC) detector is applicable for all types of indexing schemes discussed above.

Fig. 9 illustrates a block diagram of an apparatus 900 for transmitting or receiving signals according to some exemplary embodiments.

In particular, the apparatus of Fig. 9 comprises memory 910, processing circuitry 920, and interface 930, which may be capable of obtaining a data portion. The transmitting apparatus 900 may further include a wireless transceiver 940, which may be capable of communicating with each other via a bus 901.

The memory 910 may store a plurality of firmware or software modules, which implement some embodiments of the present disclosure. The memory may 910 be read from by the processing circuitry 920. Thereby, the processing circuitry may be configured to carry out the firmware/software implementing the embodiments.

The processing circuitry 920 in operation controls a Reconfigurable Intelligent Surface, RIS, by controlling each of its elements to transmit the data portion obtained by interface 930. In particular, the processing circuitry 920 controls the plurality of RIS elements to be configured in either Quadrature mode or in In-phase mode. The processing circuitry 920 may control groups of elements to be configured in the same mode, to generate a pattern, which corresponds to the data portion. For this, the processing circuitry 920 selects a pattern out of a predefined set of patterns according to the data and according to a predefined correspondence between group patterns and respective data portions and controls the RIS elements accordingly.

Further, the process circuitry 920 may configure (control) the transceiver 940, over the bus 901, to transmit a signal. The transceiver may be, for example a wireless transceiver.

Fig. 10 illustrates a block diagram of an exemplary functional structure of a memory storing program code for performing transmitter processing and the functional code parts stored therein. The functional code parts, when executed on the processing circuitry 920, perform the respective functions as follows.

Firstly, the program obtains a data portion from interface 930, which may be performed by a functional block 1010 of code in the memory 910. According to this data portion, a corresponding pattern out of a predefined set of patterns is selected in pattern selection module 1020. The correspondence between group patterns and the respective data portions is predefined. According to the selected pattern, the code instructions in memory (RIS control module 1030) cause the processing circuitry to control a RIS corresponding to the pattern.

The memory 910 is shown in Fig. 10 to be separated from the processing circuitry. However, this is only an example. In general, the memory 910 may be implemented within the processing circuitry, and e.g., within the one or more processors. The term "memory" refers to any type of long term, short term, volatile, nonvolatile, or other memory and is not to be limited to any particular type of memory or number of memories, or type of media upon which memory is stored.

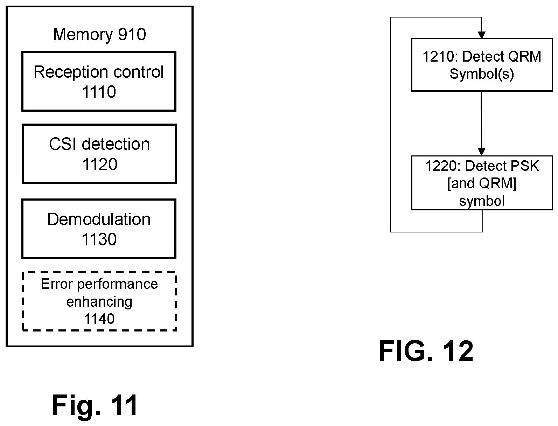

Fig. 11 illustrates a block diagram of an exemplary functional structure of a memory storing program code for performing receiver processing and the functional code parts stored therein.

The functional code parts, when executed on the processing circuitry 920, perform the respective functions as follows.

Application code of reception control module 1110 implements the control of receiving data. Based on this wireless signal, application code of CSI detection module 1120 determines the channel state information of the received signal. The CSI corresponds to a function of amplitudes of the received wireless signal configured in an in-phase mode and/or configured in a quadrature mode. Application code of the demodulation module 1130 then associates the CSI to a codeword of q bits, based on the given association between CSI values and possible codewords. For example, the q bits are determined by employing a predefined lookup table that associates CSI values with bit values.

Application code of the error performance enhancing module 1140 may also control the processing circuitry to try to enhance its error performance by, instead of selecting a solitary QRM symbol that minimizes the decision metric in a first step, choosing such QRM symbols in ascending order of their decision metric values (i.e., error values). Subsequently, the application code may try these k QRM symbols and select the one that minimizes the decision metric in a second step.

The method performed at the receiver is also illustrated in Fig. 12. In step 1210, one QRM symbol or a set of more than one candidate QRM symbols is detected. In step 1220 the PSK symbol is detected under assumption of detected one QRM symbol. Alternatively, in step 1220, a PSK candidate symbol is detected under assumption of each respective QRM candidate symbol from said set. Then, among the candidate pairs of QRM symbol / PSK symbol, one is selected which is best according to a predefined criterion. The predefined criterion may be a minimum error, or a minimum SNR, or the like.

*Some simulation results*

The indexing schemes for RIS-QRM discussed above may provide improvements in both the BER of RIS-transmitted data, and the overall BER of the system compared to a benchmark scheme [1]. A performance of the indexing schemes in terms of the SNR gain in comparison to the benchmark scheme at a target BER of $10^{-4}$ is improved in the simulations as can be seen in the following tables.

*Example 1, RIS-AP BackCom System model with the IIS:*

For the computer simulation purpose, the channels between each RIS-element and receiver ($b_i$) are assumed iid (independent and identically distributed) and follow unit power Rayleigh distribution. Number of RIS elements used are N=128. There is no direct channel between the AP and receiver, as in Fig. 5. The RIS is part of the AP which has a single antenna. The channels between the AP and each RIS-element i ($g_i$) are assumed to be equal to 1 due to the proximity and strong LOS between the AP and the RIS. The comparison is made with the benchmark in terms of SNR gain at a target BER of $10^{-4}$.

*Case A* corresponds to a case where only the RIS is transmitting data, while AP does not transmit any data and acts as an RF source for RIS. For AP $m = 0$, and for RIS $q$ is varied from 2 to 5 bits. The *bpcu* of the system in this case is *bpcu* = *q*. The following table summarizes the results.

| *q* (*bits*) | 2 | 3 | 4 | 5 |
|---|---|---|---|---|
| *bpcu = q* (*bits*) | 2 | 3 | 4 | 5 |
| *SNR Gain* (*dB*) (*Compared to benchmark*) | 82 | 81 | 80 | 81 |

Case B corresponds to a case where both, the RIS and the AP, are transmitting data simultaneously. For AP $m$ is varied from 2 *to* 7 *bits,* while the value of q is fixed at 3 *bits.* The *bpcu* of the system in this case is *bpcu* = 3 + m *bits.* The following table summarizes the results.

| *m* (*bits*) | 2 | 3 | 4 | 5 | 6 | 7 |
|---|---|---|---|---|---|---|
| *bpcu = 3 + m* (*bits*) | 5 | 6 | 7 | 8 | 9 | 10 |
| *SNR Gain* (*dB*) (*Compared to benchmark*) | 76 | 64 | 57 | 46 | 36 | 32 |

In Case C, both RIS and AP are transmitting data simultaneously. For RIS $q$ is varied from 2 *to* 5 *bits,* while the value of $m$ is fixed at 5 *bits.* The *bpcu* of the system in this case is *bpcu* = 5 + q *bits.* The following table summarizes the results.

| *q* (*bits*) | 2 | 3 | 4 | 5 |
|---|---|---|---|---|
| *bpcu = 5 + q* (*bits*) | 7 | 8 | 9 | 10 |
| *SNR Gain* (*dB*) (*Compared to benchmark*) | 36 | 46 | 48 | 47 |

*Example 2, RIS-loTs BackCom System model with the IIS:*

For the computer simulation purpose, the forward channels between transmitter and RIS-elements ($g_i$) are assumed iid and follow unit power Rayleigh distribution. The backscatter channels between RIS-elements and receiver ($b_i$) are also assumed iid and follow unit power Rayleigh distribution. The direct channel between AP and receiver follows Rician distribution with a Rician factor $K = 3$. Number of RIS elements used are N=32. For AP data $m = 3$, and for RIS data $q = 2$. The *bpcu* of the system in this case is *bpcu* = 2 + 3 = 5 *bits.* Moreover, the IIS is also compared with the benchmark for different powers of LOS signal compared to the dual-hop RIS-assisted signal at receiver. The comparison is made in terms of SNR gain at a target BER of $10^{-4}$. The following table summarizes the results.

| $\dfrac{\textit{Power of LOS Signal}}{\textit{Power of Signal through RIS}}$ | **No LOS** | $\dfrac{1}{20}$ | $\dfrac{1}{6}$ |
|---|---|---|---|
| *SNR Gain (dB) (Compared to benchmark*) | 42 | 45 | 50 |

*3. The Uniform Indexing Scheme:*

For the computer simulation purpose, RIS-AP system model is used to demonstrate the effectiveness of the Uniform indexing schemes. The channels between each RIS-element and receiver ($b_i$) are assumed iid and follow unit power Rayleigh distribution. Number of RIS elements used are N=128. There is no direct channel between AP and receiver. RIS is part of AP which has a single antenna. The channels between AP and each RIS element ($g_i$) are assumed to be equal to 1 due to proximity and strong LOS. Only RIS is transmitting data using QRM symbols, while AP does not transmit any data and acts as an RF source for RIS. For AP $m = 0$, and for RIS $q = 3$ *bits.* The *bpcu* of the system in this case is *bpcu* = $q$ = 3 *bits.* All the proposed schemes are compared with the benchmark in terms of SNR gain at a target BER of $10^{-4}$. The following table summarizes the results.

| *Indexing Scheme* | *Incremental* | *Quantile* | *Proximity* | *Exhaustive* |
|---|---|---|---|---|
| *SNR Gain (dB) (Compared to benchmark*) | 81 | 58 | 68 | 68 |

*Implementations in software and hardware*

It is noted that although embodiments and examples of the present disclosure were provided in terms of an apparatus above, the corresponding method provides the functionality described by the apparatus are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the control devicemay be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

For example, the program code may cause the processing circuitry (e.g. including one or more processors) to operate as a special purpose computer programmed to perform the techniques disclosed herein.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein. In particular, the above embodiments and exemplary implementations are multiple-input multiple-output (MIMO) compatible and can be applied to all MCSs.

*Selected embodiments and examples*

According to a first aspect, a transmitter controlling method is provided, comprising: obtaining a data portion; controlling a Reconfigurable Intelligent Surface, RIS, including a plurality of elements, to transmit the data portion, wherein the plurality of elements are partitioned into L groups, for each group among the L groups, all elements of the group are configurable in the same one of a Quadrature mode or an In-Phase mode, and the controlling comprises: selecting a pattern out of a predefined set of patterns according to the data and according to a predefined correspondence between group patterns and respective data portions, wherein the predefined set of patterns is a subset of all possible patterns for the L groups; each pattern in the predefined set of patterns defines for each of the L groups of said pattern whether said group is configured in the Quadrature mode or in the In-phase mode; and the data portion is transmitted according to the selected pattern.

According to a second aspect, in addition to the first aspect, the predefined set of patterns is formed by L patterns.

According to a third aspect, in addition to the second aspect, in the predefined set of patterns a k-th pattern, k being an integer 1 to L, consists in groups 1 to k configured in a first mode and the remaining L-k groups configured in a second mode; and the first mode is the quadrature mode and the second mode is the in-phase mode or vice versa.

According to a fourth aspect, in addition to the first aspect, the predefined set of patterns corresponds to a set obtained by: sorting all 2^L possible patterns in a predetermined order selecting out of the 2^L patterns 2^q patterns, q<L being an integer, according on the separation in the in-phase and quadrature domain, wherein said pattern channel state information for a pattern corresponds to a sum of amplitudes of groups in said pattern either for all groups configured in the in-phase mode or for all groups configured in the quadrature mode.

According to a fifth aspect, in addition to the fourth aspect, the predetermined pattern order is an order of decreasing channel amplitude of in-phase groups for the sorted patterns.

According to a sixth aspect, in addition to the fourth aspect, the selecting includes selecting the first pattern, omitting every 2L-q-1 consecutive patterns before selecting a subsequent pattern, until 2^q patterns are in the set of patterns.

According to a seventh aspect, in addition to the fourth aspect, the selecting includes selecting the pattern with the highest value of the pattern channel state information, selecting the remaining 2^q-1 patterns as those with the CSI value closest to CSI values uniformly distributed in the interval 0 to the highest value of the pattern channel state information.

According to an eighth aspect, in addition to the fourth or fifth aspect, the selecting includes: selecting the first pattern, selecting, among all unique combinations of a set of patterns including the first pattern are created, 2^q combinations with the lowest combined value of:

$$\frac{(|d_{max}| - |d_{min}|)}{|d_{max}|}$$

where d_max and d_min represent the maximum and minimum distances between all patterns located in the predetermined order next to each other in each combination.

According to a ninth aspect, in addition to any of the first to eighth aspects, for each group among the L groups, the elements of the group are arranged adjacently one to another in a rectangle or square of r1 x r2 elements, with r1 and r2 being an integer greater than 0.

According to a tenth aspect, a receiver controlling method is provided, comprising: receiving a wireless signal; detecting a channel state information based on the received wireless signal, wherein said channel state information corresponds to a function of amplitudes of the received wireless signal configured in an in-phase mode and/or configured in a quadrature mode, determining a data portion consisting of q bits, q being an integer, based on the detected channel state information and based on a given association between a set of predefined channel state information data and a plurality of respective predefined data portions consisting of q bits, q being an integer.

According to a eleventh aspect, in addition to the tenth aspect, a subset of m predefined data portions of the plurality of predefined data portions, m being an integer, are determined to be the most likely data portions to correspond to the detected channel state information, and said determining comprises selecting the corresponding data portion to be the one of the m predefined data portions corresponding to the channel state information, that minimizes the error of the received wireless signal.

According to a twelfth aspect, a program stored on a non-transitory medium comprising code instructions is provided, which when executed on one or more processors, is configured to perform any of the steps according to the methods of any of the first to eleventh aspect.

According to a thirteenth aspect, a transmitter controlling device is provided, comprising: a first interface for obtaining a data portion; a processing circuitry that is configured to: control a Reconfigurable Intelligent Surface, RIS, including a plurality of elements, to transmit the data portion, wherein the plurality of elements are partitioned into L groups, for each group among the L groups, all elements of the group are configurable in the same one of a Quadrature mode or an In-Phase mode, and the controlling comprises: selecting a pattern out of a predefined set of patterns according to the data and according to a predefined correspondence between group patterns and respective data portions, wherein the predefined set of patterns is a subset of all possible patterns for the L groups; each pattern in the predefined set of patterns defines for each of the L groups of said pattern whether said group is configured in the Quadrature mode or in the In-phase mode; and the controlling the RIS to transmit the data portion is performed according to the selected pattern.

According to a fourteenth aspect, a receiving device is provided, comprising: a receiving module that receives a wireless signal; a processing circuitry configured to: detect a channel state information based on the received wireless signal, wherein said channel state information corresponds to a function of amplitudes of the received wireless signal configured in an in-phase mode and/or configured in a quadrature mode, determine a data portion consisting of q bits, q being an integer, based on the detected channel state information and based on a given association between a set of predefined channel state information data and a plurality of respective predefined data portions consisting of q bits, q being an integer.

According to a fifteenth aspect, in addition to the fourteenth aspect, the processing circuitry is configured to: determine subset of m predefined data portions of the plurality of data portions, m being an integer, to be the most likely data portions to correspond to the detected channel state information, and choose corresponding data portion to be the one of the m predefined data portions corresponding to the channel state information, that minimized the error of the received wireless signal.

The present disclosure finds application in any wireless communication system that involves RIS. In tandem with RIS-QRM, RIS can be more effectively used to transmit data with high reliability. Presently, two specific scenarios may readily adopt the approach of the present disclosure: 1) Cost-effective and low-complexity RIS-based wireless access points, and/or 2) wireless connectivity solutions for IoT devices connected to RIS.

**Claims**

1. A transmitter controlling method comprising:

   obtaining a data portion;
   controlling a Reconfigurable Intelligent Surface, RIS, including a plurality of elements,
   to transmit the data portion, wherein

   the plurality of elements are partitioned into L groups,
   for each group among the L groups, all elements of the group are configurable in the same one of a Quadrature mode or an In-Phase mode, and

   the controlling comprises:
   selecting a pattern out of a predefined set of patterns according to the data and according to a predefined correspondence between group patterns and respective data portions,
   wherein the predefined set of patterns is a subset of all possible patterns for the L groups;
   each pattern in the predefined set of patterns defines for each of the L groups of said pattern whether said group is configured in the Quadrature mode or in the In-phase mode; and
   the data portion is transmitted according to the selected pattern.

2. The transmitter controlling method according to claim 1, wherein the predefined set of patterns is formed by L patterns.

3. A transmitter controlling method according to claim 2, wherein

   in the predefined set of patterns a k-th pattern, k being an integer 1 to L, consists in groups 1 to k configured in a first mode and the remaining L-k groups configured in a second mode; and
   the first mode is the quadrature mode and the second mode is the in-phase mode or vice versa.

4. The transmitter controlling method according to claim 1, wherein the predefined set of patterns corresponds to a set obtained by:

   sorting all 2^L possible patterns in a predetermined order
   selecting out of the 2^L patterns 2^q patterns, q<L being an integer, according on the separation in the in-phase and quadrature domain,
   wherein said pattern channel state information for a pattern corresponds to a sum of amplitudes of groups in said pattern either for all groups configured in the in-phase mode or for all groups configured in the quadrature mode.

5. The transmitter controlling method according to claim 4, wherein the predetermined pattern order is an order of decreasing channel amplitude of in-phase groups for the sorted patterns.

6. The transmitter controlling method according to claim 4, wherein the selecting includes

selecting the first pattern,

omitting every $2^{L-q}-1$ consecutive patterns before selecting a subsequent pattern, until 2^q patterns are in the set of patterns.

7. The transmitter controlling method according to claim 4, wherein the selecting includes

selecting the pattern with the highest value of the pattern channel state information,

selecting the remaining 2^q-1 patterns as those with the CSI value closest to CSI values uniformly distributed in the interval 0 to the highest value of the pattern channel state information.

8. A transmitter controlling method according to claim 4 or 5, wherein the selecting includes:

selecting the first pattern,

selecting, among all unique combinations of a set of patterns including the first pattern are created, 2^q combinations with the lowest combined value of:

$$\frac{(|d_{max}| - |d_{min}|)}{|d_{max}|}$$

where d_max and d_min represent the maximum and minimum distances between all patterns located in the predetermined order next to each other in each combination.

9. A transmitter controlling method according to any of claims 1 to 8, wherein for each group among the L groups, the elements of the group are arranged adjacently one to another in a rectangle or square of r1 x r2 elements, with r1 and r2 being an integer greater than 0.

10. A receiver controlling method comprising:

receiving a wireless signal;

detecting a channel state information based on the received wireless signal,

wherein said channel state information corresponds to a function of amplitudes of the received wireless signal configured in an in-phase mode and/or configured in a quadrature mode,

determining a data portion consisting of q bits, q being an integer, based on the detected channel state information and based on a given association between a set of predefined channel state information data and a plurality of respective predefined data portions consisting of q bits, q being an integer.

11. The receiver controlling method according to claim 10, wherein

a subset of m predefined data portions of the plurality of predefined data portions, m being an integer, are determined to be the most likely data portions to correspond to the detected channel state information, and said determining comprises selecting the corresponding data portion to be the one of the m predefined data portions corresponding to the channel state information, that minimizes the error of the received wireless signal.

12. A program stored on a non-transitory medium comprising code instructions, which when executed on one or more processors, configured to perform any of the steps according to any of the methods 1 to 11.

13. A transmitter controlling device comprising:

a first interface for obtaining a data portion;

a processing circuitry that is configured to:

control a Reconfigurable Intelligent Surface, RIS, including a plurality of elements, to transmit the data portion, wherein

the plurality of elements are partitioned into L groups,

for each group among the L groups, all elements of the group are configurable in the same one of a Quadrature mode or an In-Phase mode, and

the controlling comprises:

selecting a pattern out of a predefined set of patterns according to the data and according to a predefined correspondence between group patterns and respective data portions,
wherein the predefined set of patterns is a subset of all possible patterns for the L groups;
each pattern in the predefined set of patterns defines for each of the L groups of said pattern whether said group is configured in the Quadrature mode or in the In-phase mode; and
the controlling the RIS to transmit the data portion is performed according to the selected pattern.

**14.** A receiving device comprising:

a receiving module that receives a wireless signal;
a processing circuitry configured to:

detect a channel state information based on the received wireless signal,
wherein said channel state information corresponds to a function of amplitudes of the received wireless signal configured in an in-phase mode and/or configured in a quadrature mode,
determine a data portion consisting of q bits, q being an integer, based on the detected channel state information and based on a given association between a set of predefined channel state information data and a plurality of respective predefined data portions consisting of q bits, q being an integer.

**15.** A receiving device according to claim 14, wherein
the processing circuitry is configured to:

determine subset of m predefined data portions of the plurality of data portions, m being an integer, to be the most likely data portions to correspond to the detected channel state information, and
choose corresponding data portion to be the one of the m predefined data portions corresponding to the channel state information, that minimized the error of the received wireless signal.

Communication System CS

Transmitter Tx

Interface
ITF

Receiver Rx

**FIG. 1**

150
155

120

160

Transmitter
110

Receiver
190

**FIG. 2**

FIG. 3

FIG. 4

FIG. 5

| 610: Obtain a data portion |
|---|

↓

| 620: Select a pattern |
|---|

↓

| 630: Transmit data portion |
|---|

| Indices set $\mathbb{I}$ | Indices set $\mathbb{Q} = \mathbb{L} \backslash \mathbb{I}$ | GMP codeword |
|---|---|---|
| $\{1, 2\}$ | $\{3, 4\}$ | $[0\ 0\ 1\ 1]$ |
| $\{1, 3\}$ | $\{2, 4\}$ | $[0\ 1\ 0\ 1]$ |
| $\{1, 4\}$ | $\{2, 3\}$ | $[0\ 1\ 1\ 0]$ |
| $\{2, 3\}$ | $\{1, 4\}$ | $[1\ 0\ 0\ 1]$ |
| $\{2, 4\}$ | $\{1, 3\}$ | $[1\ 0\ 1\ 0]$ |
| $\{3, 4\}$ | $\{1, 2\}$ | $[1\ 1\ 0\ 0]$ |

**FIG. 6**          **FIG. 7**

810: Receiving a wireless signal

820: Detecting CSI

830: Determining data portion based on the detected CSI

**FIG. 8**

901

Memory 910

Interface 930

Processing circuitry 920

Wireless transceiver 940

900

**Fig. 9**

Memory 910

data portion obtaining 1010

Selecting pattern 1020

RIS control 1030

**Fig. 10**

Memory 910

Reception control
1110

CSI detection
1120

Demodulation
1130

Error performance
enhancing
1140

Fig. 11

1210: Detect QRM
Symbol(s)

1220: Detect PSK
[and QRM]
symbol

FIG. 12

Europäisches
Patentamt

European
Patent Office

Office européen
des brevets

# EUROPEAN SEARCH REPORT

**Application Number**

EP 24 15 7107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LIN SHAOE ET AL: "Reconfigurable Intelligent Surface-Aided Quadrature Reflection Modulation for Simultaneous Passive Beamforming and Information Transfer", IEEE TRANSACTIONS ON WIRELESS COMMUNICATIONS, [Online] vol. 21, no. 3, 1 March 2022 (2022-03-01), pages 1469-1481, XP093189114, US ISSN: 1536-1276, DOI: 10.1109/TWC.2021.3104059 Retrieved from the Internet: URL:https://ieeexplore.ieee.org/stampPDF/g etPDF.jsp?tp=&arnumber=9516949&ref=aHR0cHM 6Ly9pZWVleHBsb3JlLmllZWUub3JnL2RvY3VtZW50L zk1MTY5NDk=> [retrieved on 2024-07-24] | 1-3,9, 12,13 | INV. H04B7/04 H04B7/06 |
| A | * page 1470 - page 1472 * | 4-8,10, 11,14,15 | |
| | ----- | | TECHNICAL FIELDS SEARCHED (IPC) |
| X | BI XIAOXIAO ET AL: "Space-Time Block Coded Reconfigurable Intelligent Surfaces-Based Generalized Spatial Modulation", 2022 IEEE/CIC INTERNATIONAL CONFERENCE ON COMMUNICATIONS IN CHINA (ICCC), IEEE, [Online] 11 August 2022 (2022-08-11), pages 350-354, XP034191133, DOI: 10.1109/ICCC55456.2022.9880800 [retrieved on 2022-09-22] | 1-7,12, 13 | H04B |
| Y | * pages 350-352 * | 8 | |
| A | | 9-11,14, 15 | |
| | ----- | | |
| | -/-- | | |

The present search report has been drawn up for all claims

| Place of search | Date of completion of the search | Examiner |
|---|---|---|
| The Hague | 7 January 2025 | Lähteenmäki, Laura |

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 15 7107

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIN XIAOPING ET AL: "Joint RIS Grouping Design Assisted Generalized Quadrature Reflection Modulation", IEEE TRANSACTIONS ON VEHICULAR TECHNOLOGY, IEEE, USA, [Online] vol. 72, no. 4, 1 December 2022 (2022-12-01), pages 5447-5451, XP011938859, ISSN: 0018-9545, DOI: 10.1109/TVT.2022.3226181 [retrieved on 2022-12-02] | 8 | |
| A | * page 5448 - page 5449 * | 1-7,9-15 | |
| X | LI QIANG ET AL: "Reconfigurable-Intelligent-Surface-Aided Number Modulation for Symbiotic Active/Passive Transmission", IEEE INTERNET OF THINGS JOURNAL, IEEE, vol. 10, no. 22, 14 November 2022 (2022-11-14), pages 19356-19367, XP011952451, DOI: 10.1109/JIOT.2022.3222039 [retrieved on 2022-11-15] | 1-4,9-15 | |
| A | * page 1 - page 5 * | 5-8 | TECHNICAL FIELDS SEARCHED (IPC) |

The present search report has been drawn up for all claims

| Place of search | Date of completion of the search | Examiner |
|---|---|---|
| The Hague | 7 January 2025 | Lähteenmäki, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

Europäisches
Patentamt

European
Patent Office

Office européen
des brevets

**Application Number**

EP 24 15 7107

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

The Search Division considers that the present European patent application does not comply with the requirements of unity of invention and relates to several inventions or groups of inventions, namely:

```
1. claims: 1-9, 13(completely); 12(partially)

   Controlling a Reconfigurable Intelligent Surface (RIS)
   including a plurality of elements to transmit a data
   portion.
                            - - -

2. claims: 10, 11, 14, 15(completely); 12(partially)

   Determining a data portion based on detected channel state
   information and a given association between predefined
   channel state information data and a plurality of respective
   predefined data portions.
                            - - -
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. LIN** ; **F. CHEN** ; **M. WEN** ; **Y. FENG** ; **M. DI RENZO**. Reconfigurable Intelligent Surface-Aided Quadrature Reflection Modulation for Simultaneous Passive Beamforming and Information Transfer. *IEEE Transactions on Wireless Communications*, March 2022, vol. 21 (3), 1469-1481